# EUROPÄISCHE PATENTSCHRIFT

(11) **EP 2 209 863 B1**
(45) Veröffentlichungstag und Bekanntmachung des Hinweises auf die Patenterteilung: **12.08.2015**
(21) Anmeldenummer: 08849468.7
(22) Anmeldetag: 10.11.2008
(51) Int. Cl.: C09D 183/04, C08K 5/00

(54) **WASSERVERTRÄGLICHE SOLE ZUR BESCHICHTUNG VERSCHIEDENER SUBSTRATE**
WATER-COMPATIBLE SOLS FOR COATING VARIOUS SUBSTRATES
SOLS HYDROCOMPATIBLES UTILISÉS POUR RECOUVRIR DIFFÉRENTS SUSBTRATS

(30) Priorität: 15.11.2007 DE 102007054627
(43) Veröffentlichungstag der Anmeldung: 28.07.2010
(73) Patentinhaber: CHT R. BEITLICH GmbH, 72072 Tübingen (DE)
(72) Erfinder: BRÜCKMANN, Ralf, 72076 Tübingen (DE); KOCH, Matthias, 70794 Filderstadt (DE); LUTZ, Harald, 72124 Pliezhausen (DE); WILL, Peter, 72116 Öschingen (DE)
(74) Vertreter: Von Kreisler Selting Werner - Partnerschaft von Patentanwälten und Rechtsanwälten mbB
(86) Internationale Anmeldenummer: PCT/EP2008/065220
(87) Internationale Veröffentlichungsnummer: WO 2009/062907

(56) Entgegenhaltungen:
- DE-A1-102006 024 727
- US-B1- 6 319 980

## Beschreibung

Gegenstand der vorliegenden Erfindung ist die Herstellung lagerstabiler und wasserverträglicher anorganischer/organischer Sole, welche zur Oberflächen-Funktionalisierung unterschiedlichster Substrate geeignet sind.

Unter anderem in der Textiltechnik ist man bestrebt, durch die Nachbehandlung von textilen Materialien durch Beschichtung oder Ausrüstung die physikalischen mechanischen Eigenschaften nachhaltig zu verbessern; zusätzlich sollen dem Material neue Eigenschaften wie beispielsweise verbesserter Weichgriff, Hydrophilie, Hydrophobie, antimikrobielle Wirksamkeit, Flamm- oder UV-Schutz verliehen werden. Diese Eigenschaften werden durch die Applikation unterschiedlichster Ausrüstungsmittel erzielt.

Die Beschichtung oder Ausrüstung eines textilen Materials, speziell für den Bekleidungsbereich, unterliegt einer ständigen Belastung wie beispielsweise Bewegung, Reibung oder der Haushaltswäsche, der jede gebrauchstüchtige Textilie bis zu hundert Mal ausgesetzt ist. Die Haushaltswäsche stellt für das Textil und die applizierte Beschichtung eine extrem große Belastung dar. Eine waschpermanente Beschichtung oder Ausrüstung darf weder durch Quellung der Faser, durch mechanische Belastung noch durch Tenside oder Alkali geschädigt werden. Besonders wichtig ist die Alkaliresistenz, die eine waschpermanente Ausrüstung aufweisen muss, denn um eine möglichst gute Schmutzentfernung während einer Haushaltswäsche zu erhalten, ist ein hoher pH-Wert der Waschflotte notwendig. Schmutz und Textilfaser werden negativ aufgeladen und damit die elektrostatischen Abstoßungskräfte verstärkt. Um die Alkalität zu erhöhen, wird dem Waschmittel Soda zugesetzt. Daher erzielen handelsübliche Vollwaschmittel in der Waschlauge einen pH-Wert von 10 bis 11. Wie allgemein bekannt ist, werden viele Beschichtungen unter diesen Bedingungen chemisch angegriffen und sukzessiv abgewaschen. Spezielle chemische Bindungen wie beispielsweise in Estergruppen oder Silizium-Sauerstoffbindungen, wie sie in Silikonverbindungen vorliegen, können im alkalischen Milieu gespalten werden. Eine permanente Beschichtung sollte gleichmäßig und sehr engmaschig vernetzt sein, damit der Waschflotte keine Angriffspunkte geboten werden. Um dies zu gewährleisten, muss das Beschichtungsmittel über ein hohes Maß an Vernetzungspunkten verfügen. Aus diesem Grund benötigt man für die Herstellung solcher Zubereitungen Edukte, die eine hohe Anzahl an reaktiven Gruppen aufweisen, die eine Vernetzung untereinander oder eine Reaktion mit dem Substrat eingehen können.

Als hochreaktive, quervernetzende Beschichtungsmittel für Gläser und polymere Kunststoffe sind Sol-Gel-Systeme auf der Basis anorganischer/organischer Komposite allgemein bekannt. Hierfür eingesetzte Sole sind meist sehr verdünnte, Lösemittel basierende Systeme mit einem maximalen Festkörperanteil von 5 bis 10 %. Durch längere Lagerung, Zugabe von Wasser, thermische Belastung oder Aufkonzentrierung verlieren die Sole stark an Stabilität und gehen in den nicht mehr verarbeitbaren Gelzustand über.

Für den industriellen Maßstab in der Textiltechnik konnten derartige Systeme bisher keinen Eingang finden. Dies ist im Wesentlichen darauf zurückzuführen, dass in der Textilindustrie fast alle Prozesse und Maschinen für die Applikation auf wässrige Bäder und Anwendungsflotten abgestimmt sind.

Aufgrund der geringen Wasserverträglichkeit bzw. der geringen Wasserstabilität literaturbekannter Sole verbietet sich daher in der Regel eine Anwendung in der Textilveredlungsindustrie. Auch stark alkohol- bzw. lösemittelhaltige Systeme können normalerweise nicht zum Einsatz kommen, da Trocknung und Fixierung in fast allen Textilveredlungsbetrieben in nicht explosionsgesicherten Anlagen durchgeführt werden, welche zum Teil noch durch eine offene Flamme beheizt werden. Aus diesem Grund ist es auch zwingend notwendig, Produkte einzusetzen, die einen unproblematischen Flammpunkt aufweisen.

Durch die Verdünnung Alkohol basierender Sole mit Wasser zu den textilen Anwendungskonzentrationen, weisen die Zubereitungen eine starke Neigung zur Hydrolyse und Kondensation auf. Die Flotten trüben nach kurzer Zeit ein und gegebenenfalls fällt ein Metalloxid als Feststoff aus. Derartige instabile Systeme sind für den Einsatz als Ausrüstungsmittel für einen gleichmäßigen Auftrag auf das Textil nicht geeignet. Versucht man zur Erhöhung des Flammpunktes den durch die Hydrolyse frei gewordenen Alkohol z.B. destillativ zu entfernen, werden die Sole destabilisiert und es bildet sich ein wasserunlösliches Gel, das eine weitere Verarbeitung deutlich erschwert bzw. unmöglich macht. Konzentrierte Sole zur Zubereitung von Beschichtungssystemen für die textile Applikation müssen wasserverträglich (das heißt unter anderem mit Wasser mischbar) sein, dürfen keinen niedrigen Flammpunkt aufweisen und müssen über den gesamten Ausrüstungsprozess in gegebenenfalls wässrigen Bädern und Anwendungsflotten stabil sein.

In US 2004/0117915 A1 wird eine multifunktionelle nanoskalige - Oberflächenbehandlung für Textilien beschrieben. Hierbei wird eine Metalloxidmatrix zur Verbesserung der Oberflächeneigenschaften appliziert. Es wird darauf hingewiesen, dass das Textil sowie die Nanosol-Zubereitung während der Applikation wasserfrei sein müssen.

In DE 19756906 A1 werden Beschichtungsmittel für textile und polymere Materialien beansprucht. Das Beschichtungsmittel wird aus drei Komponenten, a) ein Schicht bildendes Organosol, b) ein Aluminium- oder Zirkoniumhalogenid sowie einer vernetzenden Verbindung mit mindestens zwei Hydroxylgruppen hergestellt, die für sich lagerstabil sind, aber erst unmittelbar vor der Beschichtung gemischt werden und als Mischung nur eine sehr begrenzte Stabilität aufweist.

In DE 19816136 A1 werden nanostrukturierte Formkörper und Schichten und deren Erstellung über stabile Wasser lösliche Vorstufen beschrieben. Hierbei werden wässrige, kolloidale Suspensionen mit reaktiven monomeren oder oligomeren Komponenten beschichtet. So können wässrige Sole wie beispielsweise Böhmit-, TiO₂-, ZrO₂-, oder SiO₂-Sole derart umgesetzt werden, dass nach der Aufkonzentrierung und gegebenenfalls Dispergierung des flüssigen Rückstandes in Wasser klare Lösungen erhalten werden, die über einen längeren Zeitraum stabil sind, wobei das Abziehen des Lösemittels für die Stabilisierung des Systems erforderlich ist. Bei den beschriebenen reaktiven Komponenten handelt es sich um verschiedene Silane, mit denen die Sole umgesetzt werden. Die dabei entstehenden Silizium-Sauerstoffbindungen sind aufgrund der geringeren Alkalistabilität nicht ausreichend waschecht. Die derart hergestellten Systeme werden für optische Zwecke auf Gläser, Kunststoffe sowie Metalle aufgebracht.

In DE 10063519 A1 werden lösungsmittelarme Sol-Gel-Systeme beschrieben, die durch a) die Hydrolyse oder Kondensation eines Silans, eines Alkoxids oder mehrerer Alkoxide verschiedener Haupt- oder Nebengruppenelementen und b) der Zugabe von Wasser bis zur Phasentrennung sowie c) der Abtrennung der Kondensatphase erhältlich sind. Die in Wasser unlösliche Kondensatphase kann nur mit Hilfe eines Dispergiermittels wieder in Wasser aufgenommen werden, die daraus resultierende Dispersion wird als Bindemittel für verschiedene Substrate eingesetzt.

EP 1 252 214 B1 betrifft eine organometallische Zusammensetzung, die einen Komplex von wenigstens einem Orthoester eines Metalls mit der Formel M(ROAcAc)ₓ(OR')_{y} umfasst, worin
(a) M aus der Gruppe ausgewählt ist, die besteht aus Titan, Zirkonium und Hafnium;
(b) ROAcAc einen Ester eines Alkohols ROH, wobei R eine (gegebenenfalls substituierte) C₁₋₃₀ cyclische, verzweigtkettige oder geradkettige Alkyl-, Alkenyl-, Aryl- oder Alkyl-Aryl-Gruppe oder eine Mischung davon umfasst, mit Acetessigsäure bezeichnet;
(c) OR' der Rest eines Alkohols R'OH ist, wobei R' eine (gegebenenfalls substituierte) C₇₋₃₀ cyclische, verzweigtkettige oder geradkettige Alkyl-, Alkenyl-, Aryl- oder Alkyl-Aryl-Gruppe oder eine Mischung davon umfasst, und
(d) x und y jeweils im Bereich 1 bis 3 liegen und x + y = 4;
wobei dann, wenn M Zirkonium ist, R' nicht aus einer C₇₋₈-Alkyl- oder Alkoxyalkyl-Gruppe besteht.

WO 03/093383 A1 beschreibt Substrate, die mit einer Biofilm-hemmenden Beschichtung aus einem mit organischen Gruppen modifizierten anorganischen Kondensat versehen sind, wobei zumindest ein Teil der organischen Gruppen des Kondensats Fluoratome aufweist und Kupfer- oder Silberkolloide in der Beschichtung enthalten sind.

DE 10 2006 024 727 A1 beschreibt ein Sol basiertes wasserverdünnbares Konzentrat zur Herstellung von Beschichtungsmitteln, enthaltend eine Abmischung folgender Komponenten:
(A) 0,5 bis 25 Gew.-% eines Organosols, erhältlich durch Hydrolyse und Kondensation eines oder mehrerer Alkoxysilane der allgemeinen Formel I

   R₄₋ₓSi(OR')ₓ (I)

   wobei
   R' für eine gegebenenfalls substituierte Kohlenwasserstoffgruppe mit 1 bis 8 Kohlenstoffatomen, die Reste R gleich oder verschieden voneinander, jeweils eine gegebenenfalls substituierte Kohlenwasserstoffgruppe mit 1 bis 22 Kohlenstoffatomen darstellen und x 1,2 oder 3 ist,
(B) 4 bis 55 Gew.% eines oder mehrerer Alkoxide der allgemeinen Formel II

   Me(OR')ₙ (II)

   wobei
   Me für Ti, Zr, Hf, Al, n für die Wertigkeit des Metallkations steht und R' die oben genannte-Bedeutung hat,
(C) 0,1 bis 15 Gew.-% eines oder mehrerer Komplexbildners zur Reduktion der Hydrolysegeschwindigkeit der Komponenten (A) und (B) und
(D) 5 bis 95 Gew.-% eines wasserverträglichen oder mit Wasser mischbaren Lösemittels mit einem Siedepunkt von wenigstens 150 °C,
jeweils bezogen auf 100 Gew.-% der Komponenten (A), (B), (C) und (D).

US 6319980 offenbart ein Verfahren zur Herstellung eines wasserverträglichen Sols durch Abmischung eines Organopolysiloxans, eines Organoalkoxysilans, eines Emulgators und Wasser.

Der vorliegenden Erfindung liegt daher die Aufgabe zugrunde, lagerstabile anorganische/organische Sole zur Verfügung zu stellen, die mit Wasser und gegebenenfalls einem Dispergiermittel zu Beschichtungsmitteln insbesondere für textile Materialien gemischt werden können, wobei das Substrat nach der Beschichtung - wenn überhaupt - nur geringfügig von seiner ursprünglichen Flexibilität verliert.

Die vorgenannte Aufgabe wird in einer ersten Ausführungsform gelöst durch ein Verfahren zur Herstellung von lagerstabilen, wasserverträglichen Solen zur Funktionalisierung von Oberflächen durch Abmischung folgender Komponenten:
(A) 0,5 bis 40 Gew.-% eines Organosols, erhältlich durch Hydrolyse und Kondensation einer oder mehrerer Siliziumverbindungen der allgemeinen Formel I 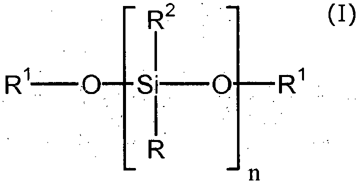 wobei
   R für gleiche oder verschiedene über ein C-Atom an das Siliziumatom gebundene, gegebenenfalls mit funktionellen Gruppen substituierte Kohlenwasserstoffgruppen mit 1 bis 22 C-Atomen steht, die gegebenenfalls durch Sauerstoff-, Schwefel, Stickstoff oder die Gruppe NR³, mit R³ gleich Wasserstoff oder C₁ bis C₁₄-Alkyl unterbrochen sind,
   die Reste R¹ gleich oder verschieden voneinander R⁴ oder Si(R⁵)₃ bedeuten, wobei R⁴ gleich oder verschieden voneinander jeweils eine gegebenenfalls substituierte Kohlenwasserstoffgruppe mit 1 bis 8 Kohlenstoffatomen darstellt die gegebenenfalls durch Sauerstoff, Schwefel, Stickstoff oder die Gruppe NR³ mit der oben genannten Bedeutung unterbrochen sind und R⁵ gleich R⁴ und/oder O-R⁴ ist, R² gleich oder verschieden voneinander für O-R¹ oder R⁴ steht wobei R¹ und R⁴ die oben genannten Bedeutungen haben und
   n einen Wert von 1 bis 30 hat,
(B) 0 bis 40 Gew.-% eines oder mehrerer Alkoxide der allgemeinen Formel II

   Me (OR⁴)ₘ (II)

   wobei
   im Fall von n = 1 Me für Si und m für 4 steht und im Fall von n > 1 Me für Si, Ti, Zr, Hf, Al und m für die Wertigkeit des Metallkations steht und R⁴ die oben genannte Bedeutung hat,
(C) 0 bis 8 Gew.-% eines oder mehrerer Komplexbildners zur Reduktion der Hydrolysegeschwindigkeit der Komponenten (A) und, (B) und
(D) 12 bis 99,5 Gew.-% eines oder mehrerer wasserverträglicher oder mit Wasser mischbarer Lösemittel mit einem Siedepunkt von wenigstens 150 °C, bevorzugt von wenigstens 160°C,
   jeweils bezogen auf 100 Gew.-% der Komponenten (A), (B), (C) und (D),
wobei man im Anschluss an die Reaktion gegebenenfalls den bei der Hydrolyse entstehenden Alkohol mit einem Siedepunkt von bis zu 160 °C destillativ entfernt, um einen Flammpunkt des Reaktionsprodukts von wenigstens 65 °C, insbesondere wenigstens 100 °C einzustellen.

Diese Zusammensetzungen unterscheiden sich also von den in DE 10 2006 024 727 A1 Offenbarten dadurch, dass bei Komponente (B) zwei Alternativen vorgesehen sind, (n = 1 bzw. n > 1), wobei die sich in Abhängigkeit von n ergebenden Alternativen eindeutig von den Zusammensetzungen in DE 10 2006 024 727 A1 verschieden sind (dies gilt selbst für den Fall von 0 Gew.-% der Komponente (B), da in DE 10 2006 024 727 A1 der allgemeinen Formel II der vorliegenden Erfindung entsprechenden Alkoxide zwingend vorgesehen sind, nämlich in einer Menge von 4 bis 55 Gew.-%).

Das oben genannte Organosol kann durch an sich bekannte Hydrolyse und Kondensation der monomeren bzw. polymeren Siliziumverbindungen, insbesondere ohne Abwesenheit von Dispergiermitteln erhalten - werden. Beispielsweise ist es möglich, entsprechende Komponenten mit einer wässrigen sauren Lösung zu versetzen, so dass ein entsprechendes insbesondere klares Hydrolysat erhalten wird.

Beispiele für Reste R in der obigen Formel sind lineare und/oder verzweigte Alkyl-, Alkenyl-, Aryl-, Alkylaryl-, Arylalkyl-, Arylalkenyl-, Alkenylaryl-Reste (vorzugsweise mit jeweils 1 bis 22 und insbesondere 1 bis 16 Kohlenstoffatomen und cyclische Formen einschließend), die durch Sauerstoff-, Schwefel-, Stickstoffatome oder die Gruppe NR" (R" = Wasserstoff oder C₁₋₁₄-Alkyl) unterbrochen sein können und einen oder mehrere Substituenten aus der Gruppe der Halogene und der gegebenenfalls substituierten Amino-, Amid-, Ammonium-, Carboxy-, Mercapto-, Isocyanato-, Hydroxy-, Alkoxy-, Alkoxycarbonyl-, Acryloxy-, Methacryloxy-, Epoxy- oder perfluorierte Alkylgruppen tragen können.

Besonders bevorzugt befindet sich unter den obigen Alkoxyverbindungen der allgemeinen Formel (I) mindestens eines, in welchem mindestens ein Rest R über eine Gruppierung verfügt, die eine Polyadditions- (einschließlich Polymerisations-) oder Polykondensationsreaktion eingehen kann.

Bei dieser zur Polyadditions- oder Polykondensationsreaktion befähigten Gruppierung handelt es sich vorzugsweise um eine Epoxygruppe oder (vorzugsweise aktivierte) Kohlenstoff-Kohlenstoff-Mehrfachbindungen (insbesondere Doppelbindungen), wobei eine (Meth)acrylatgruppe ein besonders bevorzugtes Beispiel für die letztgenannten Gruppierungen ist.

Die Komponente (A) mit n > 1, d.h. alkoxyfunktionelle, organomodifizierte Siloxane der allgemeinen Formel (I), können bevorzugt über eine zweistufige Synthese bestehend aus einer Equilibrierungs- und einer sich anschließenden Hydrosilylierungsreaktion hergestellt werden:
In einem ersten Schritt werden mit Hilfe eines Katalysators alkoxyfunktionelle Silane (III) mit cyclischen Siloxanen (IV) und Methylwasserstoffsiloxanen (V) bis zur Erreichung eines Gleichgewichts zur Reaktion gebracht (siehe Reaktionsschema 1). Diese Reaktion ist unter der Bezeichnung Equilibrierungsreaktion bekannt und wird z.B. bei W. Noll, Chemie und Technologie der Silicone, 1968, S. 188. ff. näher beschrieben.

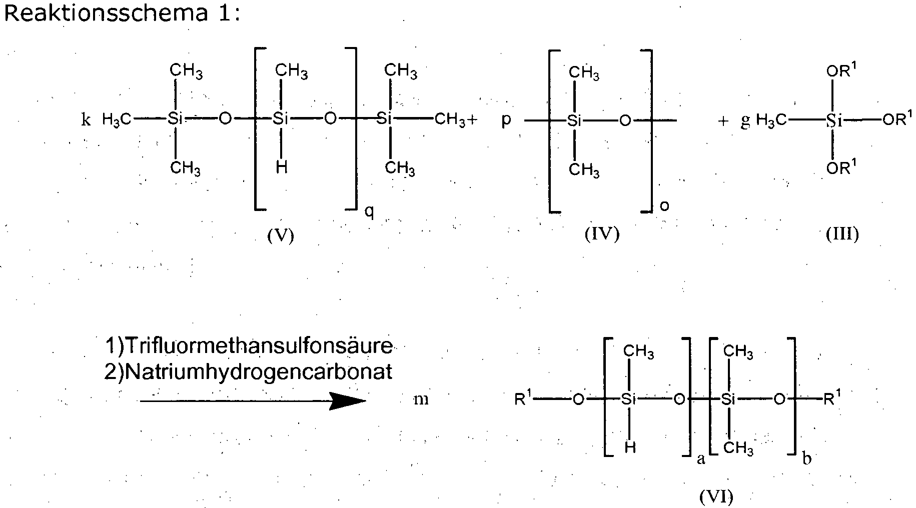

In einem zweiten Schritt (siehe Reaktionsschema 2), der Hydrosilylierung, wird das erhaltene Wasserstoffsiloxan (VI), wie in EP 1 448 648 B1 beschrieben mit den gewünschten Allylverbindungen (VII) umgesetzt.

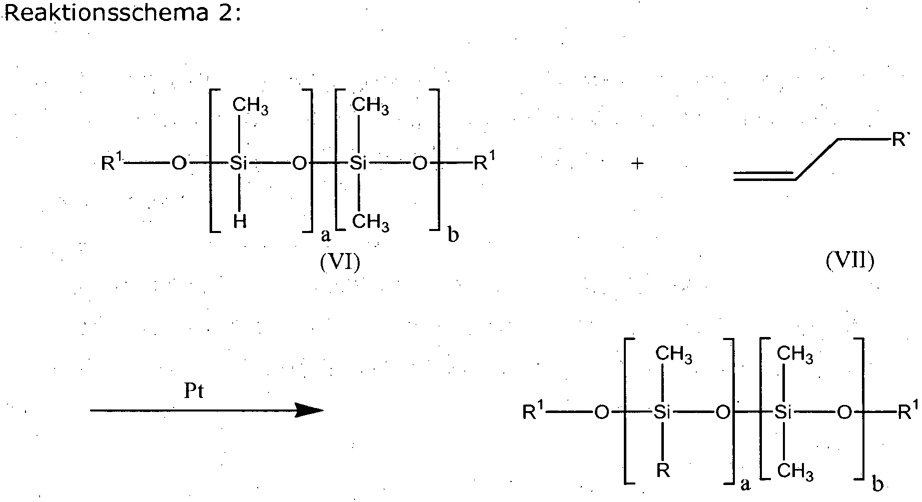

Zur Chemie der Polysiloxane, insbesondere zur Hydrosilylierung, wird verwiesen auf Walter Noll, Chemie und Technologie der Silicone, Verlag Weinheim, 2. neu bearbeitete Auflage 1968, ISBN: 0125207506, sowie auf Bogdan Marciniec (Hrsg.), Comprehensive Handbook of Hydrosilylation, S. 11-18, Pergamon Press 1992.

Das nach dem Hydrosilylierungsschritt erhaltene Polysiloxan enthält meist noch überschüssige Mengen nicht abreagierter Allylverbindung (VII) als Verunreinigung. Diese stehen der weiteren Anwendung der Polysiloxane in der vorliegenden Erfindung jedoch nicht hinderlich entgegen. Die nach obigen Verfahren hergestellten Polysiloxane weisen im Allgemeinen bei 20 °C eine Viskosität von 15 mPas bis 1000 mPas auf, bevorzugt sind 70 bis 700 mPas.

Wird im Verlauf der Reaktion dann weiterhin wenigstens ein Alkoxid der allgemeinen Formel (II) mit dem Hydrolysat zusammengegeben, so tritt bereits eine erste Reaktion ein.

Die erfindungsgemäß eingesetzten Alkoxide (Komponente B) der allgemeinen Formel (II) sind sehr reaktiv, so dass in Abwesenheit des Komplexbildners (C) die Komponenten (A) und (B) bei Kontakt mit Wasser sehr schnell hydrolisieren würden.

Erfindungsgemäß ist es jedoch nicht erforderlich, die reaktionsfähigen Alkoxide direkt in komplexierter Form einzusetzen. Vielmehr ist es möglich, den oder die Komplexbildner kurz nach dem Start der Reaktion der Komponenten (A) und (B) hinzuzugeben.

Konkrete Beispiele für derartige Verbindungen sind Aluminium-sek.-butylat, Tetramethoxysilan (TMOS), Tetraethoxysilan (TEOS), Tetra-isopropoxysilan, Titanisopropoxid, Titanpropoxid, Titanbutoxid, Zirkoniumisopropoxid, Zirkoniumpropoxid, Zirkoniumbutoxid, Zirkoniumethoxid.

Insbesondere bei den reaktionsfähigeren Alkoxiden (beispielsweise von Al, Ti, Zr usw.) kann es sich jedoch empfehlen, diese direkt in komplexierter Form einzusetzen, wobei Beispiele für geeignete Komplexierungsmittel beispielsweise gesättigte wie auch ungesättigte Carbonsäuren und β-Dicarbonyl-Verbindungen, wie beispielsweise Essigsäure, Milchsäure, Methacrylsäure, Acetylaceton und Acetessigsäurethylester, sind. Ebenfalls geeignet sind Ethanolamine sowie Alkylphosphate, wie beispielsweise Tri-, Diethanolamin und Butylphosphat.

Konkrete Beispiele für derartig komplexierte Alkoxide sind Titanacetylacetonate, Titanbisethylacetoacetate, Triehanolamintitanate, Triethanolaminzirconate oder Zirkoniumdiethylcitrate.

Der Komplexbildner (C), insbesondere eine Chelat-Verbindung, bewirkt eine gewisse Komplexierung des Metallkations, so dass die Hydrolysegeschwindigkeit der Komponenten (A) und (B) reduziert wird.

Als weiteren Bestandteil umfasst das erfindungsgemäße, mit Wasser verdünnbare Gemisch ein wasserverträgliches oder mit Wasser mischbares Lösemittel mit einem Siedepunkt von wenigstens 160 °C.

Beispielsweise kann Diethylenglykol oder Triethylenglykol eingesetzt werden. Weiterhin kommen beispielsweise Butyldiglykol, Propylenglykole, Butylenglykole, Polyethylenglykole als Komponente (D) in Betracht.

Die Aufgabe der hochsiedenden Lösungsmittel besteht insbesondere darin, dass im Austausch gegen den bei der Hydrolyse frei werdenden niedermolekularen Alkohol eine verbesserte Beständigkeit der erfindungsgemäßen Gemische erreicht werden kann. In einer bevorzugten Ausführungsform der vorliegenden Erfindung ist das Gemisch dadurch gekennzeichnet, dass die Komponenten (A) und (B) zusammen in einer Konzentration von wenigstens 15 Gew.-%, bezogen auf 100 Gew.-% der Komponenten (A), (B), (C) und (D) vorliegen. Ist die Gesamtmenge der Komponenten (A) und (B) in den erfindungsgemäßen Gemischen zu gering, so lassen sich nur unter großen Schwierigkeiten gleichmäßig deckende Beschichtungen auf den verschiedensten Substraten herstellen. Die Komponente (B) dient als Vernetzungsmittel für die Alkoxyverbindungen der Komponenten (A). Mit dem Gehalt an Komponente (B) steuert man den Vernetzungsgrad der resultierenden Beschichtung, d.h. für weichgriffgebende Beschichtungen darf der Vernetzungsgrad nicht zu hoch sein, da mit steigendem Vernetzungsgrad die Steifheit zunimmt. Dementsprechend ist es im Sinne der vorliegenden Erfindung besonders bevorzugt, wenn das Gewichtsverhältnis der Komponente (A) zu Komponente (B) im Bereich von 0,25 zu 1 bis 1 zu 100, insbesondere 50 zu 1 bis 1 zu **100** liegt.

Besonders bevorzugt im Sinne der vorgenannten Aufgabenstellung ist ein Gemisch dann, wenn die Komponenten (A) und (B) zusammen in einer Konzentration von wenigstens 25 Gew.-% bezogen auf 100 Gew.-% der Komponenten (A), (B), (C) und (D) vorliegen und das Gewichtsverhältnis der Komponente (A) zu Komponente (B) im Bereich 0,5 zu 1 bis 1 zu 25, **insbesondere 25 zu 1 bis 1 zu 25** liegt.

In den oben beschriebenen Verbindungen der Formel I sind die Si-O-Bindungen entlang der Si-O-Silikonkette besonders hydrolysestabil. Für eine Kondensation entweder mit anderen Silikonketten oder mit den Alkoxiden der Formel II muss jedoch noch mindestens eine weitere, zur Hydrolyse befähigte Alkoxygruppe enthalten sein. Im Sinne der vorliegenden Erfindung ist es folglich bevorzugt, wenn die Komponente (A) mindestens eine zur Hydrolyse befähigte Alkoxygruppe trägt.

In einer weiteren bevorzugten Ausführungsform der vorliegenden Erfindung ist das Gemisch dadurch gekennzeichnet, dass die Komponente (A), ein Organosol ist, das durch Hydrolyse und Kondensation von gegebenenfalls in organischen Lösemitteln gelösten Siliziumverbindungen der allgemeinen Formel I, wobei R für gleiche oder verschiedene über ein C-Atom an das Siliziumatom gebundene, gegebenenfalls verzweigte Kohlenwasserstoffgruppen mit 1 bis 22 C-Atomen steht, die gegebenenfalls durch Sauerstoff-, Schwefel, Stickstoff oder die Gruppe NR³, mit R³ gleich Wasserstoff oder C₁ bis C₆-Alkyl unterbrochen sind und einen oder mehrere Substituenten aus der Gruppe der Halogene und der gegebenenfalls Amino-, Amido-, Ammonium-, Carboxy-, Mercapto-, Isocyanato-, Hydroxy-, Acryloxy-, Methacryloxy-, Epoxy-, Polyether- oder perfluorierte Alkylgruppen tragen können, mit einer verdünnten anorganischen oder organischen Säure erhältlich ist.

Der Anteil der Komponente (B) an der Gesamtmischung beträgt bevorzugt 0,5 bis 40 Gew.-%.

Die erfindungsgemäß einzusetzende Komponente (B) kann in reiner Form oder auch in Form eines in einem Lösemittel gelösten Alkoxid eingesetzt werden.

Besonders bevorzugt in diesem Sinne ist es, wenn die Komponente (B) bis zu 50 Gew.-% organisches Lösemittel, beispielsweise Methanol, Ethanol, n-Propanol, Isopropanol, Butanol umfasst.

Allgemein ist es im Sinne der vorliegenden Erfindung besonders bevorzugt, wenn die Komponente (C) Carbonylverbindungen, Poly-, Ethylen-, Propylen-, Butylenglykole, Poly-, Tri-, Diamine und/oder Ethanolamine sowie Alkylphosphate umfasst.

Ganz besonders bevorzugt in diesem Sinne ist die Carbonylverbindung ausgewählt aus 1,3-Dicarbonylverbindungen.

Die Komponente (D) umfasst bevorzugt ein Wasser lösliches Lösemittel in einer Menge von 20 bis 85 Gew.-%. Bevorzugt umfasst die Komponente (D) ein oder mehrere protische Lösungsmittel. Besonders bevorzugt ist, wenn die Komponente (D) aus im Wasser löslichen Lösungsmitteln und/oder protischen Lösungsmitteln besteht.

Zur problemlosen Anwendung in Textilbetrieben kann zur Erhöhung des Flammpunktes des erfindungsgemäßen Gemisches, insbesondere auf Temperaturen oberhalb 65 °C, insbesondere oberhalb 100 °C der bei der Hydrolyse entstehende, nieder siedende Alkohole ohne Beeinträchtigung der Produkteigenschaften destillativ entfernt werden. Die Entfernung der niedersiedenden Bestandteile aus dem Reaktionssystem erfolgt bevorzugt bei erhöhter Temperatur oder unter vermindertem Druck, vorzugsweise bei erhöhter Temperatur und vermindertem Druck, wobei die Temperatur zwischen 50° C und 200° C, bevorzugt zwischen 80° C und 170° C und besonders bevorzugt zwischen 130° C und 150° C liegt. Üblicherweise wird ein Druck zwischen 20 und 900 mbar, bevorzugt zwischen 50 und 250 mbar angelegt.

Als Grenzwert für den Flammpunkt des Gemisches wird eine Temperatur gewählt, die weder gefahrgutrechtlich (Europäisches Übereinkommen über die Internationale Beförderung gefährlicher Güter auf der Straße, ADR) noch gefahrstoffrechtlich (Umgangsrecht, Richtlinie 67/548 EWG) eine Kennzeichnung mit "R10" (entzündlich) verlangt. Produkte mit einem Flammpunkt > 65° C müssen weder nach Umgangsrecht noch nach Transportrecht gekennzeichnet werden, somit ist die Verwendung in nicht explosionsgeschützten Anlagen als unproblematisch zu werten.

Zur Herstellung eines transparenten lagerstabilen Beschichtungsmittels aus den obengenannten wasserverträglichen Solen werden diese mit Wasser in einem Gewichtsverhältnis von 100 zu 1 bis 1 zu 500 verdünnt. Ein so resultierendes Beschichtungsmittel weist bevorzugt einen Flammpunkt von wenigstens 100 °C auf.

Eine weitere Ausführungsform der vorliegenden Erfindung besteht in der Verwendung des erfindungsgemäßen Beschichtungsmittels zur Behandlung organischer und anorganischer Fasern und Textilien aus wässrigen Bädern und Anwendungsflotten durch Sprühen, Gießen, Fluten, Tauchen, Schleudern, Foulardieren, Walzen oder Drucken.

Dabei kann das erfindungsgemäße Gemisch beziehungsweise das Beschichtungsmittel nicht nur den eigentlichen Wirkstoff gelöst oder dispergiert enthalten. Ebenso ist es möglich, dass Komponenten des Gemisches eine Wirkstofffunktion zukommt, ein Wirkstoff also nicht noch separat zugefügt zu werden braucht (enthält die Komponente (A) z.B. eine Ammonium-Funktionalität, so besitzt sie eine antibakterielle Wirkung; werden Titan-Alkoxide in Komponente (B) verwendet, so hat die resultierende Beschichtung UV-absorbierende Eigenschaften). Insbesondere werden die erfindungsgemäßen Gemische und/oder die Beschichtungsmittel in Kombination mit Ausrüstungsmitteln und/oder mit Suspensionen oder Dispersionen organischer und/oder anorganischer Partikel und/oder Solen zur Erzeugung von Funktionalitäten, besonders bevorzugt in Kombination mit hydrophilen, hydrophoben, UV-Schutz-, Flammschutz- und/oder antimikrobiellen Ausrüstungsmitteln eingesetzt.

Darüber hinaus ist es mit Hilfe der vorliegenden Erfindung auch möglich, organische und anorganische Fasern und Textilien in Kombination mit Suspensionen oder Dispersionen organischer und/oder anorganischer Partikel und/oder Solen einzusetzen.

Zur Kondensation der Komponenten (A) und (B) ist es erforderlich, die mit dem erfindungsgemäßen Beschichtungsmittel versehenen Substrate einer erhöhten Temperatur auszusetzen. Zum einen dient die erhöhte Temperatur der Vervollständigung der Hydrolyse und Kondensationsreaktion und darüber hinaus auch dem mehr oder weniger vollständigen Entfernen des Lösungsmittels. Dementsprechend ist es im Sinne der vorliegenden Erfindung besonders bevorzugt, die behandelten textilen Materialien bei einer Temperatur im Bereich von 60° C bis 250° C im Verlauf von 10 Sekunden bis zu 10 Stunden zu trocknen.

Neben textilen Materialien ist es im Sinne der vorliegenden Erfindung in gleicher Weise auch möglich, andere Substrate mit den erfindungsgemäßen Beschichtungsmitteln zu versehen. Besonders bevorzugt im Sinne der vorliegenden Erfindung werden daher Substrate aus Holz, Papier, Leder, Glas, Metall und/oder polymeren Kunststoffen beschichtet.

Eine weitere Ausführungsform der vorliegenden Erfindung umfasst naturgemäß auch ein textiles Material, auf welches das zuvor beschriebene Beschichtungsmittel aufgetragen und anschließend getrocknet wurde.

### Ausführungsbeispiele

### 1. Beispiel für die Herstellung alkoxyfunktioneller Wasserstoffsiloxane

In einem Vierhalskolben, versehen mit Rührer, Thermometer und Rückflusskühler, wurden unter Stickstoff 0,5 mol Methyltrimethoxysilan, 1 mol Octamethylcyclotetrasiloxan und 0,018 mol Methylhydrogensiloxan (Wacker BS 94) vorgelegt und unter Rühren auf 85 °C erhitzt. Nach der Zugabe von 0,1 % Trifluormethansulfonsäure, wurde 5h bei der Temperatur gerührt. Anschließend wurde die Säure mit überschüssigem Natriumhydrogencarbonat neutralisiert und die unlöslichen Salze mit Hilfe einer Filtration abgetrennt. Man erhielt eine klare, niederviskose Flüssigkeit mit einem definierten Wasserstoffgehalt.

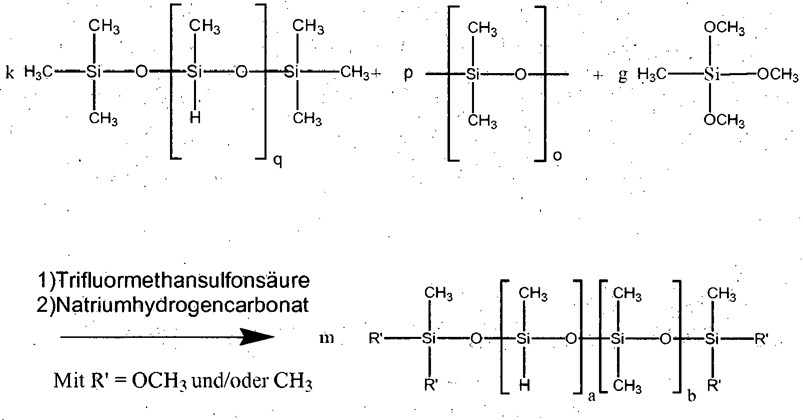

### 2. Herstellung der organomodifizierten Alkoxysiloxane

In einem Vierhalskolben, versehen mit Rührer, Tropftrichter, Thermometer und Rückflusskühler, wurden unter Stickstoff, 0,13 mol der Allylverbindung (Tabelle 1) vorgelegt und auf 60°C erhitzt. Nach Zugabe von 10 ppm eines Platinkatalysators wurde langsam 0,1 mol des Wasserstoffsiloxans aus Beispiel 1 zudosiert. Danach wurde solange bei 100°C gerührt, bis der Wasserstoffgehalt des Siloxans < 30 ppm ist. Unter Wasserstoffgehalt ist dabei der Gehalt an Si-gebundenen Wasserstoffatomen zu verstehen.

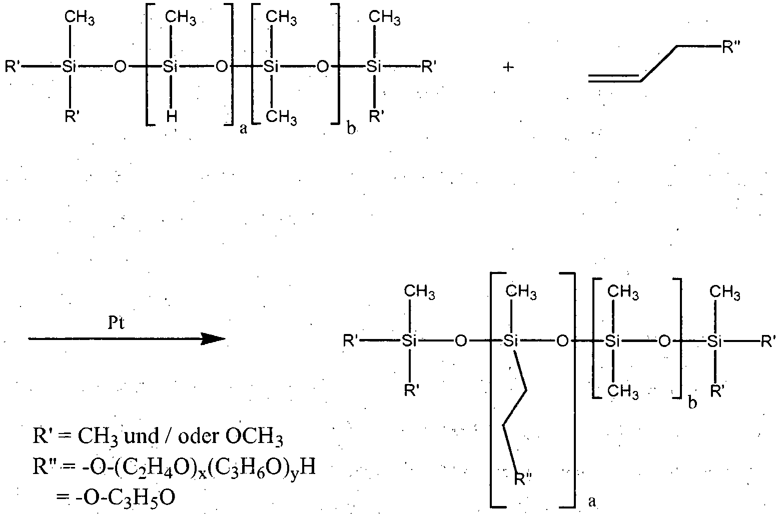

**Tabelle 1:**

| organomodifiziertes Alkoxysiloxan | Allylverbindung | Viskosität | Wasserstoffgehalt | Ausgehen |
|---|---|---|---|---|
| RF 369 | Allylglycidether (Raschig AG) | 100 mPas | 13 ppm | Klar, gelblich |
| RF 370 | Polyglycol A31/1000 (Clariant) | 550 mPas | 27 ppm | Leicht trüb, gelblich |

### Hydrolysat 1:

234,34 g (1mol) 3-Glycidyloxypropyltrimethoxysilan wurden unter Rühren mit 15,3 g 0,1 n (0,85 mol H₂O) wässriger HCl-Lösung versetzt. Die schnell klar werdende Mischung wurde 2 Stunden bei Raumtemperatur gerührt. Man erhielt ein farbloses, klares Hydrolysat.

### Hydrolysat 2:

248,35 g (1mol) 3-(Trimethoxysilyl)propylmethacrylat wurden unter Rühren mit 15,3 g 0,1 n (0,85 mol H₂O) wässriger HCl-Lösung versetzt. Die schnell klar werdende Mischung wurde 2 Stunden bei Raumtemperatur gerührt. Man erhielt ein farbloses, klares Hydrolysat.

### Hydrolysat 3:

206 g (1mol) Aminoethylaminopropylmethyldimethoxysilan, wurden unter Rühren mit 16,2 g 0,1 n (0,9 mol H₂O) wässriger HCl-Lösung versetzt. Die schnell klar werdende Mischung wurde 30 Minuten bei Raumtemperatur gerührt. Man erhielt ein farbloses, klares Hydrolysat.

### Hydrolysat 4:

180,56 g des organomodifizierten Alkoxysiloxans RF 369 wurden in 144 g Butyldiglykol gemischt und unter Rühren mit 2,28 g 0,1 n wässriger HCl-Lösung versetzt. Die Mischung wurde 2 Stunden bei Raumtemperatur gerührt. Man erhielt ein leicht trübes Hydrolysat.

### Hydrolysat 5:

94,94 g des organomodifizierten Alkoxysiloxans RF 370 wurden mit 70 g Diethylenglykol gemischt und unter Rühren mit 1,08 g 0,1 n wässriger HCl-Lösung versetzt. Die Mischung wurde 2 Stunden bei Raumtemperatur gerührt. Man erhielt ein farbloses, klares Hydrolysat.

### Hydrolysat 6:

276,5 g (1mol) Octyltriethoxysilan wurden unter Rühren mit 16,2 g 0,1 n (0,9 mol H₂O) wässriger HCl-Lösung versetzt. Die schnell klar werdende Mischung wurde 2 Stunden bei Raumtemperatur gerührt. Man erhält ein schwach trübes Hydrolysat.

### Herstellvorschrift 1:

Für die Herstellung eines erfindungsgemäßen Sols wurden in einem Becherglas bei Raumtemperatur die Komponente A) vorgelegt und unter Rühren die Komponente B) zugegeben. Die Mischung wurde anschließend 30 Minuten gerührt. Daraufhin wurde gegebenenfalls langsam die Komponente C) zugegeben. Nach weiteren 30 Minuten Rühren wurde die Komponente D) zugesetzt. Die Lösung wurde noch 30 Minuten nachgerührt. Anschließend wurde die Mischung mit Hilfe eines Rotationsverdampfers bei 150 °C und 200 mbar bis zur Erreichung eines Flammpunktes > 65° C destilliert. Die resultierende Lösung wurde langsam auf Raumtemperatur abgekühlt. Die anteiligen Gewichtsprozente der jeweiligen Komponenten sowie die Eigenschaften der Produkte sind der Tabelle 2 zu entnehmen.

### Herstellvorschrift 2:

Für die Herstellung eines erfindungsgemäßen Sols wurde in einem Dreihalskolben mit Rückflusskühler bei Raumtemperatur die Komponente A) vorgelegt und unter Rühren die Komponente B) zugegeben. Daraufhin wurde gegebenenfalls langsam die Komponente C) zugegeben. Die Mischung wurde anschließend 60 Minuten gerührt. Anschließend wurde gegebenenfalls die Komponente D) zugesetzt. Die klare Mischung wurde nun 5 Stunden bei 80° C unter Rückfluss gerührt. Anschließend wurde die Mischung mit Hilfe eines Rotationsverdampfers bei 150 °C und 200 mbar bis zur Erreichung eines Flammpunktes > 65° C destilliert. Die resultierende Lösung wurde langsam auf Raumtemperatur abgekühlt. Die anteiligen Gewichtsprozente der jeweiligen Komponenten sowie die Eigenschaften der Produkte sind der Tabelle 2 zu entnehmen.

### Herstellvorschrift 3:

Für die Herstellung eines erfindungsgemäßen Sols wurde bei Raumtemperatur in einem Dreihalskolben mit Rückflusskühler die Komponente D) vorgelegt und gegebenenfalls unter Rühren die Komponente C) zugegeben. Die Mischung wurde anschließen 30 Minuten nachgerührt. Daraufhin wurden langsam die Komponenten B) und A) zugegeben. Es ist eine leichte Wärmetönung zu beobachten. Die Mischung wurde nun 5 Stunden bei 80° C unter Rückfluss gerührt. Anschließend wurde die Mischung mit Hilfe eines Rotationsverdampfers bei 150 °C und 200 bar bis zur Erreichung eines Flammpunktes > 65° C destilliert. Die resultierende Lösung wurde langsam auf Raumtemperatur abgekühlt. Die anteiligen Gewichtsprozente der jeweiligen Komponenten sowie die Eigenschaften der Produkte sind der Tabelle 2 zu entnehmen.

| Tabelle 2 | | | | | | | | | | | | | | | | |
|---|---|---|---|---|---|---|---|---|---|---|---|---|---|---|---|---|
| Sol-Nr. | Hydrolysat 1 Gew.-% | Hydro lysat 2 Gew.-% | Hydrolysat 3 Gew.-% | Hydrolys at 4 Gew.-% | Hydrolys at 5 Gew.-% | Hydrolys at 6 Gew.-% | Zirkniumtetrapropanolat 70% in n-Propanol Gew.-% | Tetraisopropyltitanat Gew.-% | Terta-ethoxy-silan Gew.-% | Acetylaceton Gew.-% | Eisessig Gew.-% | Diethyle n-glykol Gew.-% | Triethylenglykol Gew.-% | Sol Optik | Flamm punkt °C | Herstellvorschrift |
| Sol 1 | 5,3 | | | | | | | | 22,4 | | | | 72,3 | farblos, klar | 85,3 | 1 |
| Sol 2 | 5,37 | | | | | 8,0 | | | 18,36 | | | | 68,27 | farblos, klar | 92,5 | 2 |
| Sol 3 | 2,79 | 8,77 | | | | | | | 18,13 | | 2,77 . | | 67,54 | farblos, klar | 87,1 | 1 |
| Sol 4 | | | 9,72 | | | | | | 20,5 | | 5,5 | 65,05 | | gelb, klar | 84,3 | 3 |
| Sol 5 | | | | 47,56 | | | | | 18,0 | | | | 34,44 | farblos, klar | 96,1 | 2 |
| Sol 6 | | | | 37,7 | | | 24,78 | | | 2,67 | | 34,85 | | orange-rot, klar | 98,1 | 2 |
| Sol 7 | | | 3,3 | | 33,4 | | 24,78 | | | 2,67 | 2,14 | | 33,45 | rot, klar | 89,6 | 1 |
| Sol 8 | | | | 30,5 | | | | 20,0 | | 4,65 | | 44,85 | | orange-rot, klar | 97,7 | 3 |

### Ermittlung des Flammpunkts:

Der Flammpunkt wurde angelehnt an die NORM DIN EN 22719 bestimmt.

Anwendungstechnische Prüfungen:

### 1) Bereitung einer Beschichtungsflotte:

In einem Becherglas wurden 200 g entmineralisiertes Wasser mit Essigsäure auf einen pH-Wert von 5,5 eingestellt und unter Rühren langsam mit einem Sol nach Tabelle 3 versetzt. Die Beschichtungsflotten B0 bis B8 sind farblose bis gelbliche Lösung.

**Tabelle 3:**

| Textilmuster | Beschichtungsflotte | Sol-Nr. | Einsatzmenge Sol in g |
|---|---|---|---|
| T0 | B0 | - | 0,0 |
| T1 | B1 | Sol 1 | 6,0 |
| T2 | B2 | Sol 2 | 6,0 |
| T3 | B3 | Sol 3 | 6,0 |
| T4 | B4 | Sol 4 | 6,0 |
| T5 | B5 | Sol 5 | 4,5 |
| T6 | B6 | Sol 6 | 4,5 |
| T7 | B7 | Sol 7 | 4,5 |
| T8 | B8 | Sol 8 | 4,5 |

### 2) Textilausrüstung :

2.1) Je eine 20 x 30 cm große Probe eines Baumwoll-Polyester Mischgewebes (35%/65%) mit einem Warengewicht von 210 g/m² wurde mit einer Beschichtungsflotte nach Tabelle 3 über einen Foulard ausgerüstet, auf 60% Flottenaufnahme abgequetscht und während 2 min bei 120° C getrocknet und anschließend eine Minute bei 150° C kondensiert. Die dabei erhaltenen Textilmuster (T0 bis T8) wurden folgenden Prüfungen unterzogen:

### a) Vernähbarkeitsprüfung

Die Messung der Nadeleinstichkraft ist ein Verfahren, das vom ITV-Denkendorf entwickelt worden ist. Ein Stichplattensensor unter der Nadeleinstichplatte einer Nähmaschine nimmt hier die Einstichkraft auf.

So genannte Sprengschäden sind ein Problem in der Konfektion. Beim Einstechen der Nähnadel müssen die Garne in der Lage sein, sich sehr schnell gegeneinander zu verschieben. Ist die Faser-Faser-Reibung zu groß, so können die Garne der Nadel nicht ausreichen und damit zerreißen. Beim Auftrag faserglättender Avivagen wie z.B. Silikonweichverbindungen, wurden die Reibungskräfte zwischen den Fasern herabgesetzt und die Nadeleinstichkraft verringert.

Benutzte Geräte:
▪ Messgerät zur Prüfung der Nadeleinstichkräfte des ITV-Denkendorf
▪ Nähnadeln, Typ NM 80/12 der Fa. Schmetz

### Vorbereitung:

Die Proben wurden im Normklima klimatisiert.

### Messung:

Die Prüflinge wurden doppellagig in Kettrichtung wie bei einer gewöhnlichen Nähmaschine genäht. Das Gerät selbst begrenzte die Anzahl auf 50 Einstiche mit einer Geschwindigkeit von 1000 Einstichen pro Minute. Die Prüfung wurde 3 x wiederholt. Der resultierende Mittelwert ist der Tabelle 4 zu entnehmen.

**Tabelle 4:**

| Muster | | T0 | T1 | T1 | T3 | T4 | T5 | T6 | T7 | T8 |
|---|---|---|---|---|---|---|---|---|---|---|
| Mittelwert | [cN] | 897 | 1095 | 920 | 943 | 670 | 326 | 434 | 415 | 405 |

### b) Weichgriff:

Die ausgerüsteten mit den Flotten B0 bis B8 ausgerüsteten Proben wurden bezüglich ihres Weichgriffs miteinander verglichen.

Tabelle 5 zeigt die Auswertung der Griffbeurteilung, hierfür wurde ein erfahrenes Team zusammengestellt, das die anonymisierten Griffmuster mit Hilfe eines Handtests bewertet. Die Proben wurden vor und nach den Haushaltswäschen beurteilt, wobei folgende Bewertung vorgenommen wurde:
+++ = sehr weicher Griff
++ = weicher Griff
+ = geringe Weichgriffeffekte
○ = keine Weichgriffeffekte
- = verhärteter Griff.

**Tabelle 5:**

| Muster | T0 | T1 | T2 | T3 | T4 | T5 | T6 | T7 | T8 |
|---|---|---|---|---|---|---|---|---|---|
| Weichgriff | O | - | - | - | O | ++ | + | ++ | + |

2.2) Je eine 20 x 30 cm große Probe einer weißen Baumwollpopeline (100 g/m²) wurde wie unter 2.1. beschrieben mit den Beschichtungsflotten (B9 bis B17) nach Tabelle 6 mit einer Flottenaufnahme von 75% ausgerüstet. Die erhaltenen Textilmuster T9 bis T17 wurden folgendermaßen geprüft:

**Tabelle 6:**

| Textilmuster | Beschichtungsflotte | Sol-Nr. | Einsatzmenge Sol in g |
|---|---|---|---|
| T9 | B0 | - | 0,0 |
| T10 | B10 | Sol 1 | 15,0 |
| T11 | B11 | Sol 2 | 15,0 |
| T12 | B12 | Sol 3 | 15,0 |
| T13 | B13 | Sol 4 | 15,0 |
| T14 | B14 | Sol 5 | 10,0 |
| T15 | B15 | Sol 6 | 10,0 |
| T16 | B16 | Sol 7 | 10,0 |
| T17 | B17 | Sol 8 | 10,0 |

### a) Farbbeinflussung

In Tabelle 7 ist der Weißgrad nach Berger aufgeführt. Die Messung wurde nach der Fixierung bei 150°C durchgeführt. Als Vergleichsprobe dient ein unbehandeltes Gewebe (T9). Die Farbbeeinflussung wurde mit dem Farbmessgerät SF600 PLUS-CT der Fa. Datacolor international bestimmt. Mit sinkenden Bergereinheiten nimmt die Farbbeeinflussung durch die Ausrüstung zu.

**Tabelle 7:**

| Muster | T9 | T10 | T11 | T12 | T13 | T14 | T15 | T16 | T17 |
|---|---|---|---|---|---|---|---|---|---|
| Weißgrad nach Berger | 86 | 85 | 84 | 85 | 78 | 84 | 75 | 72 | 70 |

### b) Scheuerfestigkeitsprüfung

Geprüft wurde die Scheuerfestigkeit nach DIN EN ISO 12947-2 am Martindale-Scheuerprüfgerät bis zur Zerstörung der Probe.

Benutzte Geräte:
- Probenschneider d = 38 mm
- Martindale-Scheuerprüfgerät (6 Messstellen) der Fa. James H. Heal & Co. Ltd.
- Gewichte: 9 kPa

### Vorbereitung:

Klimatisierung der Proben und Zuschneiden mittels Probenschneider.

### Messung:

Die Prüflinge wurden zusammen mit gleich großen Schaumstoffstücken als Unterlage in die dafür vorgesehenen Halter eingespannt, auf das im Gerät eingespannte Scheuergewebe gelegt und mit den Gewichten belastet. Nach Einschalten des Gerätes wurde bis zur Probenzerstörung gescheuert. Analog der DIN wurde für jede Messung mit neuem Scheuergewebe und neuem Schaumstoff gearbeitet. Die Prüfungen finden unter Normklima statt. Die Anzahl der Scheuertouren bis zur Zerstörung des Textils zeigt Tabelle 8.

**Tabelle 8:**

| Muster | T9 | T10 | T11 | T12 | T13 | T14 | T15 | T16 | T17 |
|---|---|---|---|---|---|---|---|---|---|
| Ergebnis in Touren | 9000 | 31000 | 28000 | 26500 | 15000 | 18000 | 20500 | 17500 | 23000 |

## Patentansprüche

1. Verfahren zur Herstellung von lagerstabilen, wasserverträglichen Solen zur Funktionalisierung von Oberflächen durch Abmischung folgender Komponenten:
(A) 0,5 bis 40 Gew.-% eines Organosols, erhältlich durch Hydrolyse und Kondensation einer oder mehrerer Siliziumverbindungen der allgemeinen Formel I 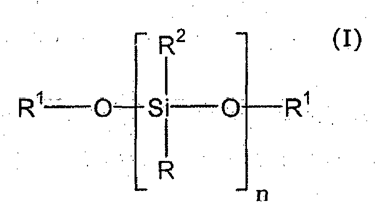 wobei R für gleiche oder verschiedene über ein C-Atom an das Siliciumatom gebundene, gegebenenfalls mit funktionellen Gruppen substituierte Kohlenwasserstoffgruppen mit 1 bis 22 C-Atomen steht, die gegebenenfalls durch Sauerstoff-, Schwefel, Stickstoff oder die Gruppe NR³, mit R³ gleich Wasserstoff oder C₁ bis C₁₄-Alkyl unterbrochen sind,
die Reste R¹ gleich oder verschieden voneinander R⁴ oder Si(R⁵)₃ bedeuten, wobei R⁴ gleich oder verschieden voneinander jeweils eine gegebenenfalls substituierte Kohlenwasserstoffgruppe mit 1 bis 8 Kohlenstoffatomen darstellt die gegebenenfalls durch Sauerstoff, Schwefel, Stickstoff oder die Gruppe NR³ mit der oben genannten Bedeutung unterbrochen sind und R⁵ gleich R⁴ und/oder O-R⁴ ist,
R² gleich oder verschieden voneinander für O-R¹ oder R⁴ steht wobei R¹ und R⁴ die oben genannten Bedeutungen haben und
n einen Wert von 1 bis 30 hat,
(B) 0 bis 40 Gew.-% eines oder mehrerer Alkoxide der allegemeinen Formel II
Me (OR⁴)ₘ (II)
wobei
im Fall von n = 1 Me für Si und m für 4 steht und im Fall von n > 1 Me für Si, Ti, Zr, Hf, Al und m für die Wertigkeit des Metallkations steht und R⁴ die oben genannte Bedeutung hat,
(C) 0 bis 8 Gew.-% eines oder mehrerer Komplexbildners zur Reduktion der Hydrolysegeschwindigkeit der Komponenten (A) und (B) und
(D) 12 bis 99,5 Gew.-% eines oder mehrerer wasserverträglicher oder mit Wasser mischbarer Lösemittel mit einem Siedepunkt von wenigstens 150°C, und
jeweils bezogen auf 100 Gew.-% der Komponenten (A), (B), (C) und (D).

2. Verfahren nach **Anspruch 1**, **dadurch gekennzeichnet, dass** die Komponente (A), ein Organosol ist, das durch Hydrolyse und Kondensation von gegebenenfalls in organischen Lösemittel gelösten Siliziumverbindungen der allgemeinen Formel I, wobei R für gleiche oder verschiedene über ein C-Atom an das Siliziumatom gebundene, gegebenenfalls verzweigte Kohlenwasserstoffgruppen mit 1 bis 22 C-Atomen steht, die gegebenenfalls durch Sauerstoff-, Schwefel, Stickstoff oder die Gruppe NR³, mit R³ gleich Wasserstoff oder C₁ bis C₆-Alkyl unterbrochen sind und einen oder mehrere Substituenten aus der Gruppe der Halogene und der gegebenenfalls Amino-, Amido-, Ammonium-, Carboxy-, Mercapto-, Isocyanato-, Hydroxy-, Acryloxy-, Methacryloxy-, Epoxy-, Polyether- oder perfluorierte Alkylgruppen tragen können mit einer verdünnten anorganischen oder organischen Säure erhältlich ist.

3. Verfahren nach Anspruch 1, **dadurch gekennzeichnet, dass** die Komponente (A) mit n > 1 über eine Equilibrierungs- und anschließender Hydrosilylierungsreaktion hergestellt wird.

4. Verfahren nach einem der Ansprüche 1 bis 3, **dadurch gekennzeichnet, dass** 0,5 bis 40 Gew.-% Komponente (B) eingesetzt werden, **die gegebenenfalls bis zu 50 Gew.-% organisches Lösemittel umfasst.**

5. Verfahren nach einem der Ansprüche 1 bis **4**, **dadurch gekennzeichnet, dass** man eine Komponente (C) einsetzt, die Carbonylverbindungen, Poly-, Ethylen-, Propylen-, Butylenglykole, Poly-, Tri-, Diamine und/oder Ethanolamine sowie Alkylphosphate umfasst.

6. Verfahren nach einem der Anspruch 1 bis **5**, **dadurch gekennzeichnet, dass** mindestens 0,2 Gew.-% Komponente (C) eingesetzt werden.

7. Verfahren nach einem der Ansprüche 1 bis **6**, **dadurch gekennzeichnet, dass** die Komponente (D) ein Wasser lösliches Lösemittel in einer Menge von 20 bis 85 Gew.-% umfasst.

8. Verfahren nach einem der Ansprüche 1 bis **7**, **dadurch gekennzeichnet, dass** man die Alkohole mit einem Siedepunkt von höchstens 160 °C destillativ entfernt, um den Flammpunkt einzustellen und gegebenenfalls Wasser und ein Dispergiermittel zusetzt.

9. Transparentes und lagerstabiles Beschichtungsmittel enthaltend ein wasserverträgliches Sol- erhältlich nach einem der Ansprüche 1 bis **8** und Wasser in einem Gewichtsverhältnis von 100 zu 1 bis 1 zu 500.

10. Beschichtungsmittel nach Anspruch **9** mit einem Flammpunkt von wenigstens 65 °C.

11. Verwendung des Beschichtungsmittels nach Anspruch **9** oder **10** zur Behandlung organischer und anorganischer Fasern und Textilien aus wässrigen Bädern und Anwendungsflotten durch Sprühen, Gießen, Fluten, Tauchen, Schleudern, Foulardieren, Walzen oder Drucken **oder zur Behandlung organischer und anorganischer Fasern und Textilien in Kombination mit Suspensionen oder Dispersionen organischer und/oder anorganischer Partikel und/oder Solen.**

12. Verwendung nach Anspruch **11** in Kombination mit Ausrüstungsmitteln und/oder mit Suspensionen oder Dispersionen organischer und/oder anorganischer Partikel und/oder Solen zur Erzeugung von Funktionalitäten, insbesondere in Kombination mit hydrophilen, hydrophoben, UV-Schutz-, Flammschutz- und/oder antimikrobiellen Ausrüstungsmitteln.

13. Verwendung nach **Anspruch 11 oder 12**, wobei man die behandelten textilen Materialien bei einer Temperatur im Bereich von 60° C bis 250° C im Verlauf von 10 Sekunden bis zu 10 Stunden trocknet.

14. Verwendung des Beschichtungsmittels nach Anspruch **9** oder **10** zur Behandlung von Substraten aus Textilien, Holz, Papier, Leder, Glas, Metallen und/ oder polymeren Kunststoffen.

15. Textiles Material umfassend ein nach dem Auftragen auf die Oberfläche des Materials getrocknetes Beschichtungsmittel nach Anspruch **9** oder **10**.

## Claims

1. A process for the preparation of storage-stable and water-compatible sols for the functionalization of surfaces by mixing the following components:
(A) from 0.5 to 40% by weight of an organosol obtainable by the hydrolysis and condensation of one or more silicon compounds of general formula I 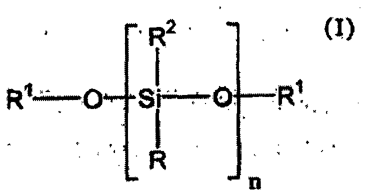 wherein R represents the same or different hydrocarbon groups with from 1 to 22 carbon atoms, optionally substituted with functional groups, which are bonded to the silicon atom through a carbon atom, optionally interrupted by oxygen, sulfur, nitrogen or the group NR³, with R³ being hydrogen or C₁ to C₁₄ alkyl;
the radicals R¹ are the same or different and represent R⁴ or Si(R⁵)₃, wherein R⁴ are the same or different and each represent an optionally substituted hydrocarbon group with from 1 to 8 carbon atoms, optionally interrupted by oxygen, sulfur, nitrogen or the group NR³ with the meaning mentioned above; and R⁵ is R⁴ and/or O-R⁴;
R² are the same or different and represent O-R¹ or R⁴, R¹ and R⁴ having the meanings as mentioned above; and
n is from 1 to 30;
(B) from 0 to 40% by weight of one or more alkoxides of general formula II
Me(OR⁴)ₘ (II)
wherein
in the case where n=1, Me represents Si and m is 4, and in the case where n>1, Me represents Si, Ti, Zr, Hf or Al, and m is the valence of the metal cation, and R⁴ has the meaning mentioned above;
(C) from 0 to 8% by weight of one or more complexing agents for reducing the hydrolysis rate of components (A) and (B); and
(D) from 12 to 99.5% by weight of one or more water-compatible or water-miscible solvents having a boiling point of at least 150 °C; and
respectively based on 100% by weight of components (A), (B), (C) and (D).

2. The process according to claim 1, **characterized in that** component (A) is an organosol obtainable by the hydrolysis and condensation of silicon compounds of general formula I, optionally dissolved in organic solvents, wherein R represents the same or different optionally branched hydrocarbon groups with from 1 to 22 carbon atoms, bonded to the silicon atom through a carbon atom and optionally interrupted by oxygen, sulfur, nitrogen or the group NR³, with R³ being hydrogen or C₁ to C₆ alkyl, and may bear one or more substituents selected from the group of halogens and optionally amino, amido, ammonium, carboxy, mercapto, isocyanato, hydroxy, acryloxy, methacryloxy, epoxy, polyether or perfluorinated alkyl groups, with a diluted inorganic or organic acid.

3. The process according to claim 1, **characterized in that** component (A) with n>1 is prepared by an equilibration and subsequent hydrosilylation reaction.

4. The process according to any of claims 1 to 3, **characterized in that** from 0.5 to 40% by weight of component (B), optionally comprising up to 50% by weight of organic solvent, is employed.

5. The process according to any of claims 1 to 4, **characterized in that** a component (C) comprising carbonyl compounds, polyethylene, -propylene, -butylene glycols, poly-, tri-, diamines and/or ethanolamines as well as alkyl phosphates is employed.

6. The process according to any of claims 1 to 5, **characterized in that** at least 0.2% by weight of component (C) is employed.

7. The process according to any of claims 1 to 6, **characterized in that** component (D) comprises a water-soluble solvent in an amount of from 20 to 85% by weight.

8. The process according to any of claims 1 to 7, **characterized in that** the alcohols having a boiling point of at most 160 °C are removed by distillation to adjust the flash point, and water and a dispersing aid are optionally added.

9. A transparent and storage-stable coating agent containing a water-compatible sol obtainable according to any of claims 1 to 8 and water in a weight ratio of 100:1 to 1:500.

10. The coating agent according to claim 9 having a flash point of at least 65 °C.

11. Use of the coating agent according to claim 9 or 10 for treating organic and inorganic fibers and textiles from aqueous baths and application liquors by spraying, casting, flow coating, dipping, centrifuging, padding, rolling or printing, or for treating organic and inorganic fibers and textiles in combination with suspensions or dispersions of organic and/or inorganic particles and/or sols.

12. The use according to claim 11 in combination with finishing agents and/or with suspensions or dispersions of organic and/or inorganic particles and/or sols to produce functionalities, especially in combination with hydrophilic, hydrophobic, UV-protecting, flame-retardant and/or antimicrobial finishing agents.

13. The use according to claim 11 or 12, wherein the treated textile materials are dried at a temperature within a range of from 60 °C to 250 °C in the course of 10 seconds up to 10 hours.

14. Use of the coating agent according to claim 9 or 10 for treating substrates made of textiles, wood, paper, leather, glass, metal and/or polymeric plastics.

15. A textile material comprising a coating agent according to claim 9 or 10 dried after having been applied to the surface of the material.

## Revendications

1. Procédé pour la production de sols compatibles avec l'eau et stables au stockage pour la fonctionnalisation de surfaces par le mélange des composants suivants :
(A) 0,5 à 40 % en poids d'un organosol qui peut être obtenu par l'hydrolyse et la condensation d'un ou plusieurs composés de silicium répondant à la formule I générale 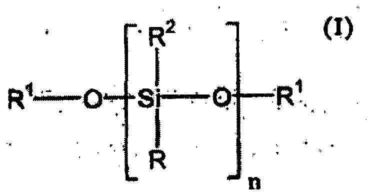 où R représente des groupes hydrocarbonés avec 1 à 22 atomes de carbone, identiques ou différents, liés à l'atome de silicium par un atome de carbone, éventuellement substitués avec des groupes fonctionnels, éventuellement interrompus par des atomes d'oxygène, de soufre, d'azote ou par le groupe NR³, R³ représentant de l'hydrogène ou un alkyle en C₁ à C₁₄,
les restes R¹ sont identiques ou différents et représentent R⁴ ou Si(R⁵)₃, où chaque R⁴, identiques ou différents, représente un groupe hydrocarboné avec 1 à 8 atomes de carbone, éventuellement substitué, éventuellement interrompus par des atomes d'oxygène, de soufre, d'azote ou par le groupe NR³ avec la définition donnée ci-dessus, et R⁵ est égal à R⁴ et/ou O-R⁴,
R², identiques ou différents, représente O-R¹ ou R⁴, R¹ et R⁴ ayant les significations indiquées ci-dessus, et
n a une valeur de 1 à 30,
(B) 0 à 40 % en poids d'un ou plusieurs alkoxydes de la formule générale II
Me(OR⁴)ₘ (II)
où
quand n = 1, Me représente Si et m représente 4, et quand n > 1, Me représente Si, Ti, Zr, Hf, Al, et m représente la valence du cation métallique, et R⁴ a la signification indiquée ci-dessus,
(C) 0 à 8 % en poids d'un ou plusieurs agents complexants pour réduire la vitesse d'hydrolyse des composants (A) et (B), et
(D) 12 à 99,5 % en poids d'un ou plusieurs solvants compatibles avec l'eau ou miscibles à l'eau, ayant un point d'ébullition d'au moins 150 °C,
respectivement par rapport à 100 % en poids des composants (A), (B), (C) et (D).

2. Procédé selon la revendication 1, **caractérisé en ce que** le composant (A) est un organosol qui peut être obtenu par par l'hydrolyse et la condensation d'un ou plusieurs composés de silicium répondant à la formule I générale, éventuellement dissouts dans des solvants organiques, où R représente des groupes hydrocarbonés avec 1 à 22 atomes de carbone, identiques ou différents, liés à l'atome de silicium par un atome de carbone, éventuellement ramifiés, éventuellement interrompus par des atomes d'oxygène, de soufre, d'azote ou par le groupe NR³, R³ représentant de l'hydrogène ou un alkyle en C₁ à C₆, pouvant porter un ou plusieurs substituants choisis dans le groupe des halogènes et éventuellement des groupes amino, amido, ammonium, carboxy, mercapto, isocyanato, hydroxy, acryloxy, méthacryloxy, époxy, polyéther ou alkyle perfluorés, avec un acide dilué, inorganique ou organique.

3. Procédé selon la revendication 1, **caractérisé en ce que** le composant (A) avec n > 1 est produit par une réaction d'équilibration et ensuite d'hydrosilylation.

4. Procédé selon l'une quelconque des revendications 1 à 3, **caractérisé en ce que** de 0,5 à 40 % en poids du composant (B), qui éventuellement comporte jusqu'à 50 % en poids de solvant organique, sont utilisés.

5. Procédé selon l'une quelconque des revendications 1 à 4, **caractérisé en ce qu'**un composant (C) comprenant des composés carbonylés, des glycols polyéthyléniques, polypropyléniques, polybutyléniques, des poly-, tri-, diamines et/ou des éthanolamines et des alkylphosphates est utilisé.

6. Procédé selon l'une quelconque des revendications 1 à 5, **caractérisé en ce qu'**au moins 0,2 % en poids du composant (C) est utilisé.

7. Procédé selon l'une quelconque des revendications 1 à 6, **caractérisé en ce que** le composant (D) comprend un solvant miscible à l'eau en une quantité de 20 à 85 % en poids.

8. Procédé selon l'une quelconque des revendications 1 à 7, **caractérisé en ce que** les alcools avec un point d'ébullition d'au plus 160 °C sont éliminés par distillation pour ajuster le point d'éclair, et de l'eau et un dispersant sont éventuellement ajoutés.

9. Agent de revêtement transparent et stable au stockage, contenant un sol compatible avec l'eau et pouvant être obtenu selon l'une quelconque des revendications 1 à 8, et de l'eau dans un rapport pondéral de 100:1 à 1:500.

10. Agent de revêtement selon la revendication 9 avec un point d'éclair d'au moins 65 °C.

11. Utilisation de l'agent de revêtement selon la revendication 9 ou 10 pour le traitement de fibres et de textiles organiques et inorganiques provenant de bains aqueux et de bains d'application, par pulvérisation, coulée, inondation, immersion, centrifugation, foulardage, roulement ou impression, ou pour le traitement de fibres et de textiles organiques et inorganiques en combinaison avec des suspensions ou dispersions de particules organiques et/ou inorganiques et/ou des sols.

12. Utilisation selon la revendication 11 en combinaison avec des agents de finissage et/ou avec des suspensions ou dispersions de particules organiques et/ou inorganiques et/ou des sols pour générer des fonctionnalités, notamment en combinaison avec des agents de finissage hydrophiles, hydrophobes, protecteurs contre les ultraviolets, ignifugeants et/ou antimicrobiens.

13. Utilisation selon la revendication 11 ou 12, dans laquelle les matières textiles traitées sont séchées à une température comprise entre 60 °C et 250 °C au cours de 10 secondes jusqu'à 10 heures.

14. Utilisation de l'agent de revêtement selon la revendication 9 ou 10 pour le traitement de substrats en textiles, bois, papier, cuir, verre, métaux et/ou plastiques polymères.

15. Matière textile comprenant un agent de revêtement selon la revendication 9 ou 10 séché après être appliqué sur la surface de la matière.
